# EUROPEAN PATENT APPLICATION

(11) **EP 1 411 568 A1**
(43) Date of publication of application: **21.04.2004**
(21) Application number: 02733488.7
(22) Date of filing: 12.06.2002
(51) Int. Cl.: H01M 8/02, H01B 1/06

(54) **PROTON CONDUCTOR AND ELECTROCHEMICAL DEVICE USING THE SAME**

(30) Priority: 29.06.2001 JP 2001200029; 25.04.2002 JP 2002123925
(71) Applicant: Sony Corporation, Tokyo 141-0001 (JP)
(72) Inventor: HINOKUMA, Koichiro, c/o SONY CORPORATION, Tokyo 141-0001 (JP); FUKUSHIMA, Kazuaki, c/o SONY CORPORATION, Tokyo 141-0001 (JP)
(74) Representative: Rupp, Christian, Dipl.-Phys.
(86) International application number: PCT/JP2002/005852
(87) International publication number: WO 2003/003492

(57) **Abstract**

Disclosed is a proton conductor which does not need to replenish water and which can be used even in a dry atmosphere and in a high temperature range. The proton conductor includes carbon clusters having functional groups capable of releasing a proton, and a substance having portions capable of serving as proton-receiving portions. Alternatively, the proton conductor includes a substance having functional groups capable of releasing a proton, and carbon clusters having portions capable of serving as proton-receiving portions. Carbon clusters, particularly, those carbon clusters which have a specified molecular structure such as fullerenes and carbon nanotubes, with various acid functional groups introduced thereinto, show proton conductivity even in a dry state, and an addition of a substance for promoting the dissociation of protons to the carbon clusters enhances the proton conductivity drastically.

## Description

### Technical Field

The present invention relates to novel proton conductors using a carbon cluster, and further to electrochemical devices, such as fuel cells, using the proton conductors.

### Background Art

Fuel cells have drawn attention as a next-generation electric energy generation apparatus of the environmental concern type because of their advantages such as high efficiency and cleanness, and development thereof is under way in various fields.

The fuel cells themselves can be generally classified according to the kind of the proton conductor used therein. This is because the use temperature and use conditions of the fuel cells are heavily dependent on the properties of the proton conductor. Since the properties of the proton conductor used thus have a great effect on the cell performance, enhancement of the performance of the proton conductor is a major key to enhancement of the performance of the fuel cell.

Generally, in a temperature range from normal temperature to 100°C, exclusive, a proton conductive polymer film composed of a solid polymer film is used. Typical examples of the polymer film include the material available from du Pont under the tradename Nafion and the material available from Gore under the tradename Gore Film, which are perfluorosulfonic acid resins, and their improvements are under way. Other than these perfluorosulfonic acid reins, hydrocarbon-based polymeric conductive films have also been reported in scientific or technological associations, in papers and the like in recent years.

In the above-mentioned proton conductive polymer films, taking of moisture into the film makes it possible for protons released from sulfonic acid groups to move easily. In this case, the optimum water content differs depending on the kind of the polymer film, but, generally, it is around 20% based on the polymer film in many cases. This content corresponds to about 200 g of water, or about 10 mol of water molecules, contained per 1 mol of the sulfonate groups, based on the fact that these polymer films normally contain about 1 mol of the sulfonate groups per 1000 g of the film. By utilizing the water molecules contained in such a large amount, a high proton conductivity is realized through the so-called vehicle conduction mechanism. The vehicle conduction mechanism is a conduction mechanism in which dissociated protons move together with water molecules after they are bonded to the water molecules by hydrogen bond; thus, the water molecules are each used like a vehicle in the conduction mechanism, hence the name 'vehicle conduction mechanism'.

Meanwhile, in a proton conductive polymer film capable of proton conduction by the vehicle conduction mechanism, the water content in the polymer film is greatly influenced by the dryness condition of the atmosphere to which the film is exposed and by temperature. For example, in a dry atmosphere, the water content in the polymer film is lowered, so that the proton conductivity of the film is rapidly lowered accordingly. Similarly, a temperature rise also reduces the water content in the film attendant on a rise in the vapor pressure, and the proton conductivity tends to decrease unless moisture is supplied by humidification. Thus, in the proton conductive polymer film for proton movement by utilization of the vehicle conduction mechanism, it is necessary to replenish water because a reduction in the water content renders the movement of water molecules difficult and greatly lowers the proton conductivity. This makes difficult the way of using the proton conductive polymer film, and has been an obstacle in putting the proton conductive polymer films into practical use.

The present invention has been proposed in consideration of the above-mentioned circumstances of the prior art. Accordingly, it is an object of the present invention to provide a novel proton conductor which does not need replenishment with water, which can be used even in a dry atmosphere and in a high temperature region, and which can greatly enhance proton conductivity. It is another object of the present invention to provide a proton conductor which is dense and is excellent in gas barrier property. It is a further object of the present invention to provide an electrochemical device capable of displaying excellent performance without being influenced by the atmosphere to which it is exposed.

### Disclosure of Invention

In order to attain the above objects, the present inventors have made intensive and extensive studies for a long time. As a result of their studies, the present inventors have found out that carbon clusters with various acid functional groups introduced thereinto, parituclarly carbon clusters having a specific molecular structure such as fullerene and carbon nanotube show proton conductivity even in a dry state and that the proton conductivity can be markedly enhanced by addition of a substance for promoting the dissociation of protons.

Namely, according to the present invention, there is provided a proton conductor comprising carbon clusters having functional groups capable of releasing a proton, and a substance having portions capable of serving as proton-receiving portions, or, alternatively, there is provided a proton conductor comprising a substance having functional groups capable of releasing a proton, and carbon clusters having portions capable of serving as proton-receiving portions. In addition, according to the present invention, there is provided an electrochemical device comprising a first electrode and a second electrode, and a proton conductor clamped between the electrodes, wherein the proton conductor comprises carbon clusters having functional groups capable of releasing a proton, and a substance having portions capable of serving as proton-receiving portions, or, alternatively, there is provided an electrochemical device comprising a first electrode and a second electrode, and a proton conductor clamped between the electrodes, wherein the proton conductor comprises a substance having functional groups capable of releasing a proton, and carbon clusters having portions capable of serving as proton-receiving portions.

The carbon clusters having the functional groups capable of releasing a proton (carbon cluster having a proton-dissociating ability) are capable of dissociation of protons even in a dry state, and the dissociated protons display a high conductivity in a wide temperature range including normal temperature (for example, the range from about 160 to -40°C). On the other hand, the substance having the portions capable of serving as proton-receiving portions promotes the dissociation of protons. This is because each of the proton-receiving portions (-O- or the like) has a lone pair of electrons, so that a hydrogen bond is liable to be formed with a proton there, and an energy stability as a whole is attained even if the proton is dissociated.

In the present invention, the substance having the portions capable of serving as proton-receiving portions functions to only promote the dissociation of protons, which is a role different from that of the water molecule serving for the vehicle conduction mechanism in a proton conductive polymer film; therefore, the substance does not move attendant on the movement of the protons but remains stable. While the proton conductive polymer film must be constantly supplied with a sufficient quantity of water for smoothing the vehicle conduction mechanism, the proton conductor according to the present invention requires only the addition of water in a quantity sufficient for promoting the dissociation of protons and does not require a surplus of water. Therefore, in the case of the proton conductor according to the present invention, it is unnecessary to replenish water.

This applies also to the case of using the substance having the functional groups capable of releasing a proton and the carbon clusters having the portions capable of serving as proton-receiving portions. In this case, the carbon clusters having the portions capable of serving as proton-receiving portions function to promote the dissociation of protons and to play the role of proton conduction. Particularly, where both of the two components are carbon cluster derivatives, these components can be disposed in a structurally dense state, whereby a denser proton conductor and smooth proton supply are realized, leading to a higher proton conductivity and a higher gas barrier property.

Besides, in the electrochemical device according to the present invention, the above-described proton conductor is clamped as a matrix between a first electrode and a second electrode. Therefore, unlike a conventional fuel cell using a proton conductive polymer film as a proton movement medium, the electrochemical device according to the invention does not need a humidifier or the like, so that a system in a smaller size and with a simpler structure is realized.

### Brief Description of Drawings

Fig. 1 schematically illustrates various examples of a carbon cluster serving as a base body.
Fig. 2 schematically illustrates other examples of carbon cluster (partial fullerene structures).
Fig. 3 schematically illustrates further examples of carbon cluster (tubular carbonaceous bodies).
Fig. 4 schematically illustrates yet other examples of carbon cluster (diamond structures).
Fig. 5 schematically illustrates still further examples of carbon cluster (in which clusters are bonded to each other).
Fig. 6 is a schematic diagram showing the manner of proton conduction in a proton conductor.
Fig. 7 is a schematic illustration of a fuel cell.
Fig. 8 is a characteristic diagram showing the relationship between the amount of moisture added and conductivity.

### Best Mode for Carrying out the Invention

Now, a proton conductor and an electrochemical device to which the present invention has been applied will be described in detail below referring to the drawings.

The proton conductor according to the present invention basically comprises, as a principal component thereof, carbon clusters having functional groups capable of releasing a proton (H⁺) (proton dissociative groups) introduced thereinto. In such a proton conductor, protons move by way of the proton dissociative groups, to develop ion conductivity. As the carbon cluster as a base body, an arbitrary one can be used; however, it is necessary that ion conductivity should be greater than electron conductivity after the proton dissociative groups are introduced into the carbon cluster.

The carbon cluster means a collection formed by bonding or aggregation of from several to several hundred atoms (of carbon). The aggregate (collection) enhances proton conductivity, provides a sufficient film strength while maintaining the chemical properties, and promises easy formation of a layer. In this case, the kind of the carbon-carbon bond is not particularly limited. In addition, the carbon cluster may not necessarily be entirely composed of carbon only, and other atoms may be present therein. There are a variety of such carbon clusters, examples thereof including fullerenes represented by C₆₀, C₇₀, C₈₂ and the like, carbon clusters having an open end at at least a portion of the fullerene structure, and tubular carbonaceous bodies (so-called carbon nanotubes). The SP2 bonds in fullerenes and carbon nanotubes partly include an element of SP3 bond, and, therefore, most of them have no electron conductivity, so that fullerenes and carbon nanotubes are preferable for use as the base body of the proton conductor.

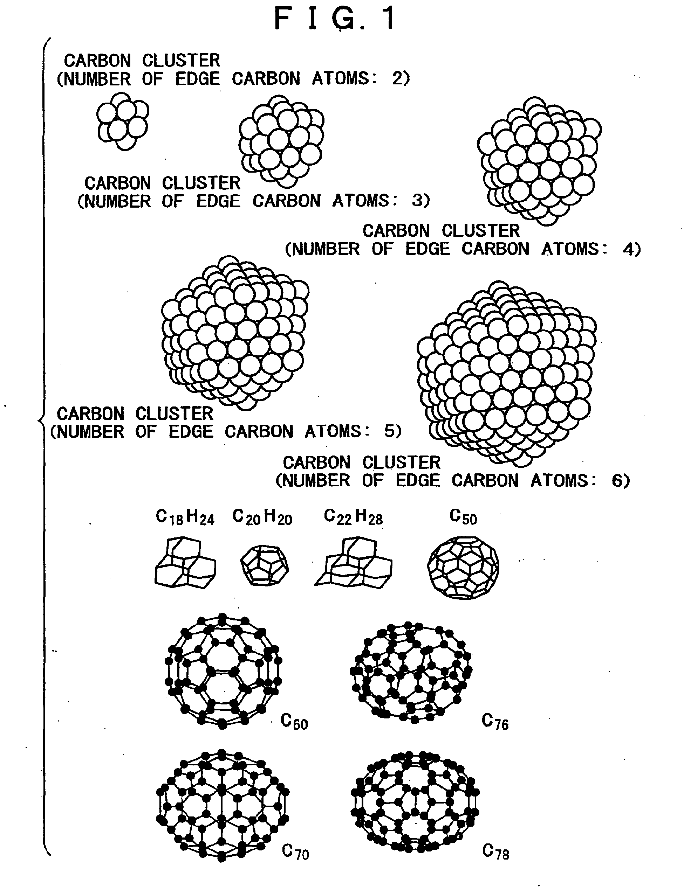

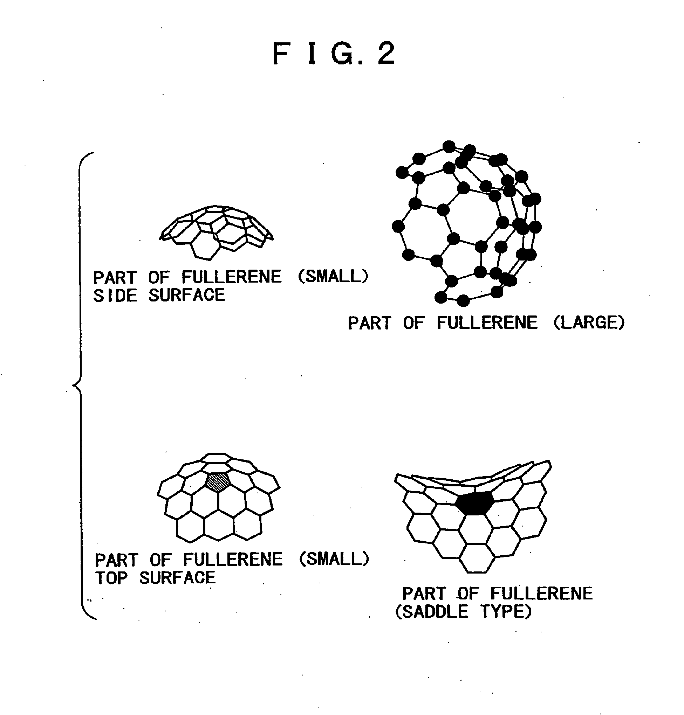

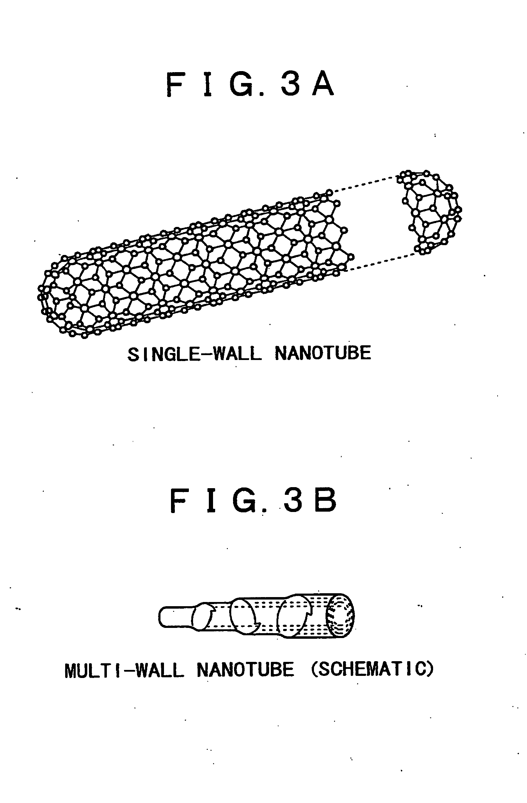

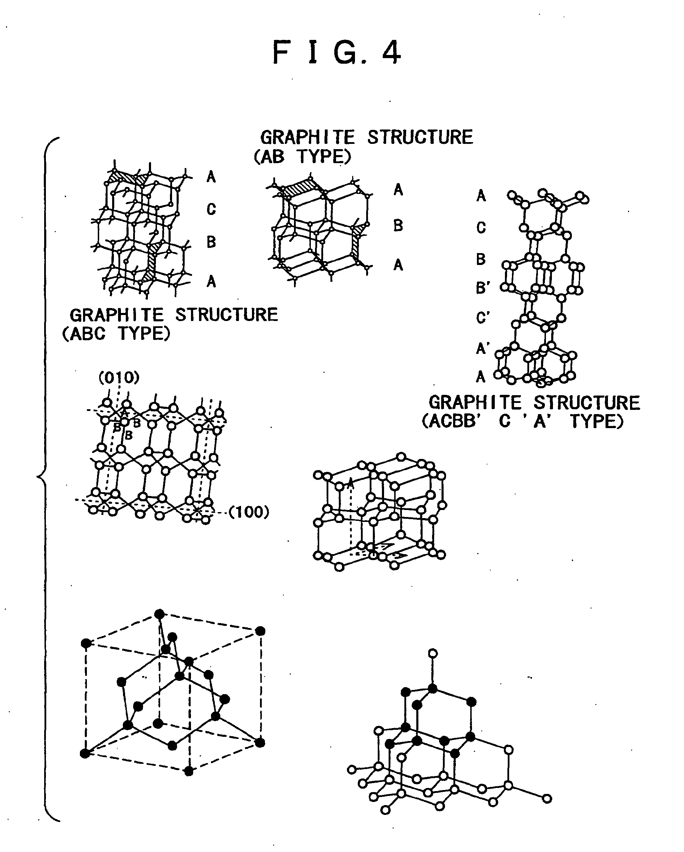

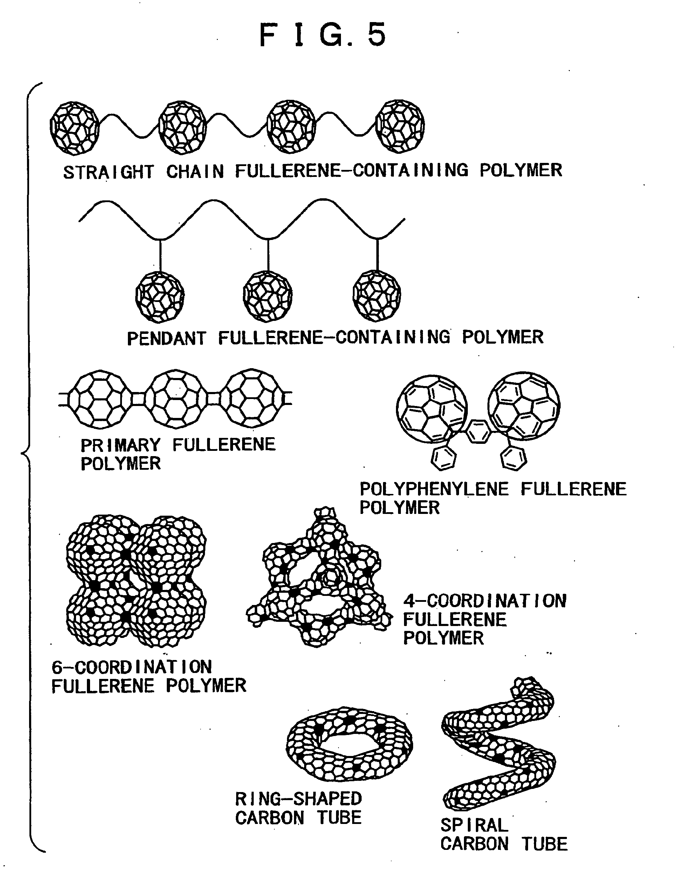

Fig. 1 illustrates various carbon clusters having a spherical, spheroidal or other similar closed surface structure composed of a collection of a multiplicity of carbon atoms. The above-mentioned fullerenes belong to this kind of carbon clusters. On the other hands, various carbon clusters showing missing of parts of the roughly spherical structures are illustrated in Fig. 2. In this case, the carbon clusters are characterized by the presence of open ends in the structure, and such structures are often found as by-products in the process of producing fullerene by arc discharge. Fig. 3 illustrates tubular carbon clusters. The tubular carbon clusters include those called carbon nanotube (CNT) having a diameter of several nanometers or below, typically from 1 to 2 nm, and those called carbon nanofiber (CNF) having a diameter of several nanometers or above, sometimes up to 1 µm. Particularly, as CNT, two kinds are known: single-wall carbon nanotube (SWCNT) (See Fig. 3(a)) composed of a monolayer tube, and multi-wall carbon nanotube (MWCNT) (See Fig. 3(b)) having two or more layers disposed concentrically. In addition, where most of the carbon atoms in the carbon clusters are in SP3 bond, there are obtained a variety of clusters having a diamond structure as illustrated in Fig. 4. Fig. 5 show various cases in which clusters are bonded to each other, and even such structures are applicable to the above-mentioned base body.

On the other hand, examples of the functional groups capable of releasing a proton (H+) (proton dissociative groups) which are introduced into the carbon cluster include functional groups having at least one species selected from the group consisting of -SO₃H,-PO(OH)₂, -SO₂NHSO₂-, -SO₂NH₂, and -COOH as the proton-releasing portion. Specific examples of the proton dissociative groups include functional groups represented by the formulas -A-SO₃H, -A-PO(OH)₂, -A-SO₂NHSO₂-R⁰ (R⁰ is - CF₃ or -CH₃), -A-SO₂NH₂, and -A-COOH [where A is any one of O, R, O-R, R-O, and O-R-O; and R is an alkylene moiety represented by the formula CₓH_{y} (1 ≦ x ≦ 20, 2 ≦ y ≦ 40)]. Also, other specific examples of the proton dissociative groups include functional groups represented by the formulas -A'-SO₃H, -A' -PO(OH)₂, -A'-SO₂NHSO₂-R⁰ (R⁰ is -CF₃ or -CH₃), and -A' -SO₂NH₂-A' -COOH [where A' is any one of R', O-R', R' -O, R' -O-R", and O-R'-O; and each of R' and R" is a fluoroalkylene moiety represented by the formula CₓF_{y}H_{z} (1 ≦ x ≦ 20, 1 ≦ y ≦ 40, 0 ≦ z ≦ 39)].

In addition, together with the functional groups capable of releasing a proton, an electron-attractive group may be introduced into the carbon cluster, examples of the electron-attractive group including nitro group, carbonyl group, carboxyl group, aldehyde group, alkoxycarbonyl group, nitrile group, haloalkyl group, sulfone group, and halogen atoms (fluorine, chlorine, etc.). Specific examples of the electron-attractive group include -NO₂, -CN, -F, -Cl, -COOH, -COOR¹, -CHO, -COR¹, - CF₃, and -SO₃CF₃ (where R¹ represents an alkyl group). Where the electron-attractive groups are coexisting with the functional groups capable of releasing a proton, the electron-attractive effect thereof promises easy dissociation of protons from the functional groups, resulting in that the protons can easily move by way of the functional groups.

The number of the functional groups introduced into the carbon cluster may be an arbitrary number within the range of the number of carbon atoms constituting the carbon cluster, and is desirably 5 or above. Incidentally, in the case of fullerene, for example, the number of the functional groups is preferably not more than one half of the number of the carbon atoms constituting the fullerene, in order to retain the π electron property of the fullerene and to induce an effective electron-attractive property.

The functional groups capable of releasing a proton can be introduced into the carbon clusters, for example, by first synthesizing the carbon clusters through arc discharge on a carbon-based electrode, and subsequently treating the carbon clusters with an acid (by use of sulfuric acid or the like), or further subjecting the acid-treated carbon clusters to a treatment such as hydrolysis, or appropriately conducting sulfonation, phosphoric acid esterification or the like. By this procedure, the carbon cluster derivatives as the object product (the carbon clusters having the functional groups capable of releasing a proton) can be obtained easily.

For example, when a multiplicity of fullerene derivatives produced by introducing the above-mentioned functional groups into fullerenes used as the carbon clusters are aggregated, the proton conductivity displayed on the basis of bulk, or the collection of the fullerene derivatives, is characterized in that the protons arising from the large amount of the functional groups (for example, OSO₃H groups) originally contained in the molecules are related directly with the movement of protons, so that it is unnecessary to take in hydrogen ions or protons arising from water vapor molecules in the atmosphere or the like, and it is unnecessary to externally supply water, particularly to absorb moisture or the like from the outside air; thus, there is no limitation to the atmosphere. Since quite a large number of the functional groups can be introduced into one fullerene molecule, the number density of the conduction-relating protons per unit volume of the conductor is very large. This is the reason why the proton conductor according to the present invention displays the effective conductivity.

In addition, fullerene serving as the base body of each of these derivative molecules particularly has an electrophilic property, which is considered to greatly contribute to promotion of the ionization of hydrogen ions in the functional groups. It is considered that the proton conduction by way of the introduced groups contributes greatly to the proton conduction as a whole, but, in the case of the fullerene derivatives, the conduction by way of the outer-shells due to the electrophilic property of the fullerene molecules may also be included in the conduction as a whole. This is another reason why the proton conductor according to the present invention displays excellent proton conductivity.

Such a proton conductor is composed mostly of the carbon atoms of fullerene, and, therefore, it is light in weight, is less liable to be denatured, is comparatively clean, and is free of contaminants which would adversely affect the proton conduction characteristic. Furthermore, the production cost of fullerenes is being lowered rapidly. Thus, fullerenes are more ideal carbon-based material than any other material, from resource, environmental, economic and other various points of view.

Thus, the carbon clusters having the functional groups capable of releasing a proton themselves have a structural property that the spatial density of the acid functional groups is high, and the electronic property of the carbon cluster (for example, fullerene) constituting the base body or the like factor promises a structure in which protons are easily dissociated and easily hops between sites, thereby realizing proton conduction even in a dry state. However, the proton conductivity this much is not yet satisfactory, and improvement thereof is desired. In view of this, the present inventors have conducted various try-and-error works. As a result, they have found out that when a predetermined amount of a new component, specifically a substance having portions capable of serving as proton-receiving portions is added as a second component to the carbon clusters having the functional groups capable of releasing a proton, the dissociation of protons is promoted, and the density of conduction-related protons in the material is markedly increased, resulting in a remarkable rise in proton conductivity.

As the substance having the portions capable of serving as proton-receiving portions, those compounds which contain such atoms as N, O, S, and P as constituent elements of the portions are suitable. Preferable examples of the suitable compounds include compounds containing such a portion as -O-, R²-CO-R³, R²-CO-O-, -O- CO-O-, -OH, -S-, -NH-, -NR²-, and -Si- (where R² and R³ each represent a hydrocarbon chain) as the proton-receiving portion. The substance having the portions capable of serving as proton-receiving portions is required only to have the function of promoting the dissociation of protons, and is not required to have the vehicle function. Therefore, the substance may be constituted of a somewhat large molecule, a polymer or the like.

Specific examples of the above-mentioned substance include, first, those substances which contain the group -O-, and specific examples of which include water, polyethylene oxide, polypropylene oxide, polybutylene oxide, polyphenylene oxide, siloxanes, and crown ethers. Next, specific examples of the substance include those substances which contain the group -OH, and specific examples of which include ethylene glycol, propylene glycol, polyvinyl alcohol, polyallyl alcohol, polypropyl alcohol, polyphenol, and polystyryl alcohol. In addition, specific examples of the substance include those substances which contain the group -S-, and specific examples of which include dimethyl sulfoxide, polyethylene sulfide, polypropylene sulfide, polybutylene sulfide, polyallylphenylene sulfide, and cyclosulfides. Further, specific examples of the substance include those substances which contain the group -NH-, and specific examples of which include N-methylpyrrolidone, dimethyl formamide, dimethyl acetamide, polyethylene imine, propropylene imine, polybutylene imine, and polybenzimidazoles. Furthermore, specific examples of the substance include those substances which contain the group -O-CO-O-, and specific examples of which include ethylene carbonate, propylene carbonate, polyethylene carbonate, polypropylene carbonate, and polybutylene carbonate. Naturally, these specific examples are not limitative.

By use of a substance having a vapor pressure lower than that of water as the above-mentioned substance having the portions capable of serving as proton-receiving portions, it is possible to use the proton conductor in a higher temperature range than that in the case where water is used as the above-mentioned substance. Therefore, a substance having a somewhat high boiling point is preferable for use as the above-mentioned substance. Here, the boiling point demanded is determined according to the temperature at which the proton conductor is expected to be used. For example, the boiling point is not lower than room temperature in the case of using the proton conductor at room temperature (for example, by use of water as the above-mentioned substance, it is possible to use the proton conductor in a room temperature region), and the boiling point is not lower than about 100°C in the case of using the proton conductor at around 100°C. If the boiling point is below the use temperature, it is impossible to maintain the above-mentioned substance in the proton conductor. In consideration of stability also, it is preferable to set the boiling point to a temperature sufficiently higher than the use temperature, for example, to a temperature of the use temperature plus about 50°C.

The appropriate mixing amount of the above-mentioned substance having the portions capable of serving as proton-receiving portions is closely related to the number of the functional groups capable of releasing a proton. In practice, a remarkable effect is displayed when the substance having the portions capable of serving as proton-receiving portions is mixed into the carbon clusters having the functional groups capable of releasing a proton in such a proportion that the ratio (N₂/N₁) of the number N₂ of the portions capable of serving as proton-receiving portions to the number N₁ of the functional groups is in the range of from 0.5 to 3. If the ratio is below 0.5, the number of the portions capable of serving as proton-receiving portions which arise from the substance is less than one half of the number of the functional groups, leading to insufficient dissociation of protons from the functional groups, with the result that the proton conductivity intrinsically possessed by the material (the carbon clusters having the functional groups capable of releasing a proton) cannot be displayed sufficiently. On the contrary, when the ratio exceeds 3, the density of the functional groups based on the whole part of the material is reduced or, for example, the volume occupied by the substance having the portions capable of serving as proton-receiving portions becomes too large, with the result that the proton conductivity may be rather lowered or gas barrier property may be lowered. It is the most effective to mix the substance having the portions capable of serving as proton-receiving portions into the carbon clusters having the functional groups capable of releasing a proton in such a proportion that the number of the functional groups and the number of the portions capable of serving as proton-receiving portion are equal to each other.

While the foregoing is the basic constitution of the present invention, a combination of a substance having functional groups capable of releasing a proton with carbon clusters having portions capable of serving as proton-receiving portions, contrary to the above, may also be adopted. Particularly, it is effective to use carbon clusters, represented by fullerene, as the base bodies of both of the two components. In the case of a combination of carbon clusters (fullerene derivatives) having the functional groups capable of releasing a proton with carbon clusters (fullerene derivatives) having the portions capable of serving as proton-receiving portions, the second component constituting a proton dissociation source also has a molecular structure similar to that of the first component and has a roughly spherical shape; therefore, by mixing such a second component into the first component, it is possible to dispose both the components in a structurally denser state, thereby realizing a denser proton conductor and smooth proton supply. As a result, it is possible to obtain such effects as enhancement of proton conductivity and enhancement of gas barrier property.

The above-described proton conductor can be directly press molded into a desired shape, for example, a pellet or a thin film, and can be molded by filtration. In this case, a binder is not needed, which is effective for enhancing the proton conductivity and for reducing the weight of the proton conductor. Particularly, when a polymeric material is used as the second component, the polymeric material functions also as a binder, thereby giving good film forming property and moldability. Naturally, addition of a third component as a binder may also be adopted. The polymeric material usable as the third component is not particularly limited, inasmuch as it hampers proton conductivity as little as possible and it has a film forming property. Normally, a polymeric material which has no electron conductivity and has a good stability is used. Specific examples of such a polymeric material include polyfluoroethylene and polyvinylidene fluoride.

The proton conductors according to the present invention can be used for a variety of electrochemical devices. Namely, in a basic structure comprised of a first electrode, a second electrode, and a proton conductor clamped between the electrodes, the proton conductor according to the present invention can be used as the proton conductor. Specific examples of the electrochemical devices include electrochemical devices in which the first electrode and the second electrode are gas electrodes, and electrochemical devices in which active substance electrodes are used as the first electrode and the second electrode.

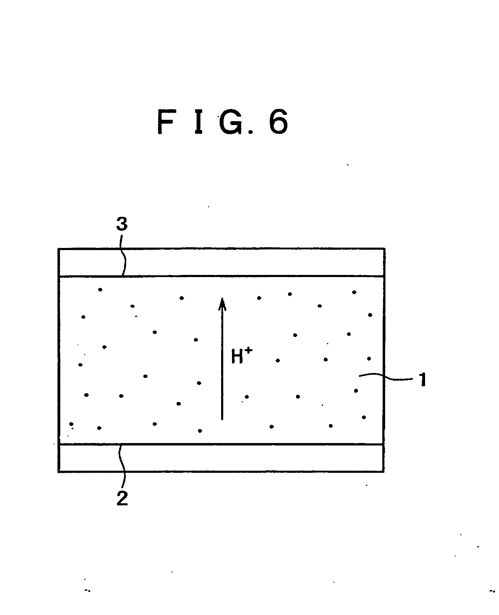

Now, an embodiment in which the above-mentioned proton conductor is applied to a fuel cell will be described. The mechanism of proton conduction in a fuel cell is as schematically illustrated in Fig. 6, in which a proton conduction portion 1 is clamped between a first electrode (for example, a hydrogen electrode) 2 and a second electrode (for example, an oxygen electrode) 3, and dissociated protons (H⁺) move from the side of the first electrode 2 toward the side of the second electrode 3 along the arrow in the drawing.

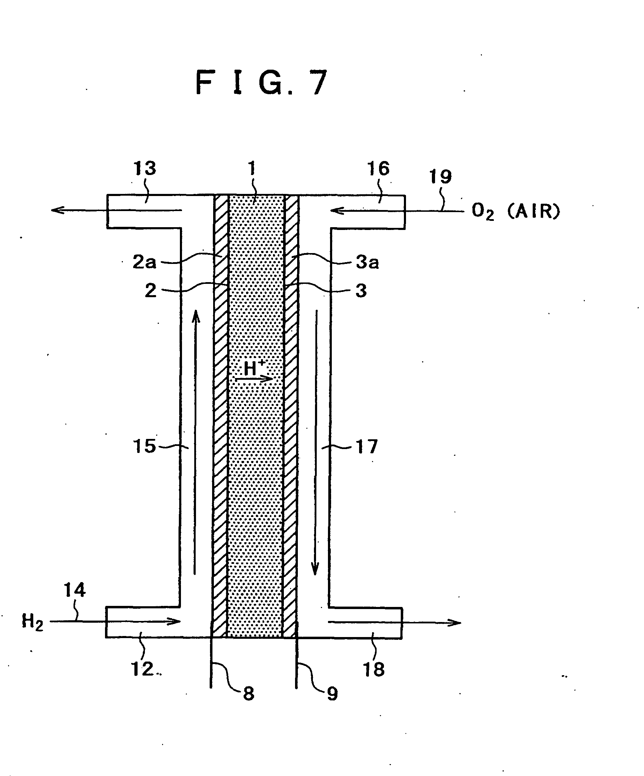

Fig. 7 illustrates an embodiment of a fuel cell using the proton conductor according to the present invention. The fuel cell comprises a negative electrode (fuel electrode or hydrogen electrode) 2 and a positive electrode (oxygen electrode) 3 which have catalysts 2a and 3a in close contact therewith or dispersed therein, respectively, and which are opposed to each other, with a proton conduction portion 1 clamped between the electrodes. The negative electrode 2 has a terminal 8, while the positive electrode 3 has a terminal 9, and an electromotive force is taken out via the terminals 8 and 9. In use, on the side of the negative electrode 2, hydrogen is supplied through an inlet port 12 and is discharged through an outlet port 13 (this may be omitted). Protons are generated while a fuel (H₂) 14 passes through a conduit 15, and the protons thus generated move together with protons generated in the proton conduction portion 1 to the side of the positive electrode 3, where they react with oxygen (air) 19 supplied through an inlet port 16 into a conduit 17 and flowing toward an outlet port 18, whereby the desired electromotive force is taken out.

In the fuel cell constituted as above, while protons are dissociated in the proton conduction portion 1, the protons supplied from the side of the negative electrode 2 move toward the side of the positive electrode 3; therefore, the fuel cell is characterized by a high proton conductivity. Accordingly, it is unnecessary to provide a humidifier or the like for supplying water, so that the system can be made simpler in structure and lighter in weight.

### Examples

Now, specific examples of the present invention will be described below, based on experimental results.

### Example 1

Two grams of powder of C₆₀ fullerene was put into 30 ml of fuming sulfuric acid, and the resultant mixture was stirred at 60°C in a nitrogen atmosphere for 3 days. The reaction mixture obtained was slowly poured into diethyl ether cooled on an ice-water bath; in this case, diethyl ether not subjected to a dehydration treatment was used. The precipitate obtained was separated by centrifugation, then washed with diethyl ether three times and with a 2:1 mixture of diethyl ether and acetonitrile two times, and was dried at 40°C in vacuum, to obtain a powder. The powder thus obtained was subjected to FT-IR measurement, the results being substantially coinciding with the IR spectrum of a fullerene derivative partly containing hydroxyl groups and OSO₃H groups shown in reference (Chiang, L.Y.; Wang, L.Y.; Swirczewski. J.W.; Soled, S.; Cameron, S., J. Org. Chem. 1994, 59, 3960), whereby the powder was confirmed to be the objective substance. The fullerene derivative synthesized as above is C₆₀(OSO₃H)₆(OH)₆.

After the powder obtained above was dried, a predetermined amount of water as a second component was mixed into the powder, followed by well mixing in a mortar. Eighty milligrams of the powder admixed with water was weighed, and subjected to unidirectional pressing, to obtain a circular pellet 15 mm in diameter. The pressure in the pressing was about 5 t/cm². As a result, the powder was found to be excellent in moldability notwithstanding the absence of a binder resin or the like therein, and could be easily palletized.

The pellet thus molded was subjected to measurement of conductivity by an AC impedance method. In the measurement, first, the pellet was clamped between aluminum plates 15 mm in diameter (the same diameter as that of the pellet), AC voltages (amplitude: 0.1 V) at frequencies of 7 MHz to 0.01 Hz were impressed on the assembly, and complex impedance at each of the frequencies was measured. The measurement was carried out at room temperature in a dry atmosphere.

When the impedance of the molded pellet is measured, a very clear single semicircular arc can be observed, though some flatness exists at a high frequency portion. This indicates that a conduction behavior of some charged particles exists in the inside of the pellet. Further, in a low frequency region, a steep rise in the imaginary part of the impedance is observed. This indicates that blocking of the charged particles is generated between the pellet and the metallic electrode as the AC voltage slowly approaches a DV voltage. Since the charged particles on the metallic electrode side are electrons, naturally, it is seen that the charged particles in the inside of the pellet are not electrons or holes but are other charged particles, namely, ions. In view of the constitution of the fullerene used, the charged particles in the pellet are considered to be nothing but protons.

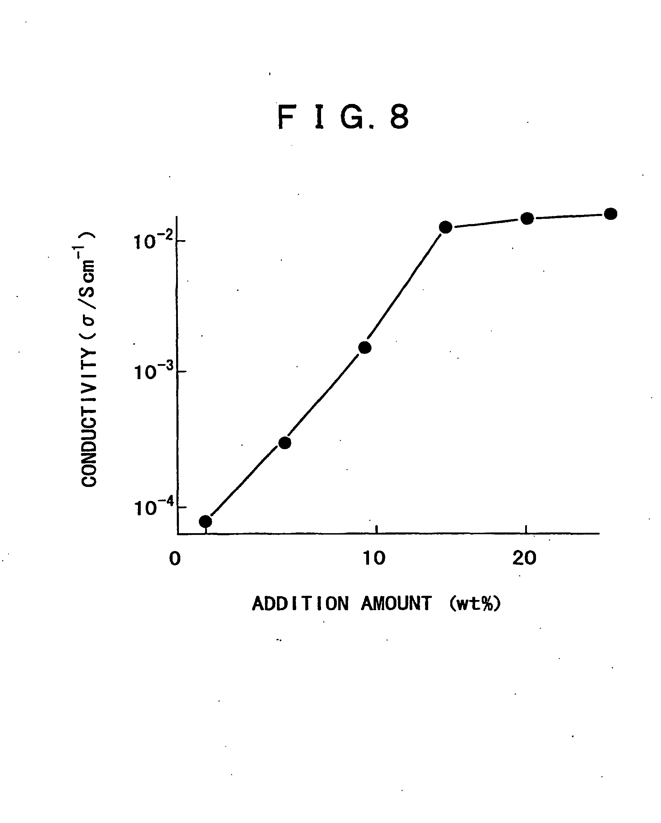

The conductivity of the charged particles (protons) can be determined from the X-axis intercept of the arc seen on the high frequency side. Fig. 8 shows the relationship between the addition amount of water as the second component and conductivity. As is clear from Fig. 8, the conductivity substantially reaches its maximum at the time when the addition amount of water is 15 wt%, and a further increase in the addition amount causes little variation in the conductivity. On the other hand, when the addition amount was more than 20 wt%, the material was softened and it was difficult to mold a good pellet. This difficulty is considered to occur also in the case of forming a film, leading to a problem as to gas barrier property. Accordingly, it is preferable to set the addition amount of water to 20 wt% or below [namely, to set the ratio (N₂/N₁) of the number N₂ of the portions capable of serving as proton-receiving portions to the number N₁ of the functional groups to 3 or below].

### Example 2

A low molecular weight polyethylene oxide (PEO) having a molecular weight of about 600, a highly viscous liquid, was mixed with C₆₀{ (CH₂)₄SO₃H} ₆ serving as a proton supply source in such amounts that the ratio of the number of the groups -O- contained in the PEO to the number of the groups SO₃H in C₆₀{ (CH₂)₄SO₃H} ₆ was 1:1. The resultant mixture, assuming a muddy form, was molded into a sheet shape, which was subjected to measurement of conductivity.

In this case, the sheet was held at 100°C for discharging a minute amount of moisture originally contained in the sheet, and the conductivity of the sheet at that temperature was measured, to be 1.2×10⁻³ S/cm. This is cpnsidered to be an indication of proton conduction in which the -O- sites in the PEO, not water, serve as proton ionization hosts and protons move by using the ionization hosts as hopping sites. Besides, the conductivity is very high, for a system not using water. This is considered to arise also from the fact that the content of the PEO in terms of the above-mentioned ratio is as very low as 1:1 and the content of the material as the proton generation source is high. Accordingly, it is considered that the PEO as the second component functions effectively notwithstanding the very low content thereof, thereby leading to a high proton conductivity.

### Example 3

An aqueous solution of a polyvinyl alcohol (PVA) having a molecular weight of about 10000 was mixed with an aqueous solution of C₆₀{ (CH₂)₄SO₃H} ₆ serving as a proton supply source in such amounts that the ratio of the number of the groups -OH contained in the PVA to the number of the groups SO₃H in C₆₀{ (CH₂)₄SO₃H} ₆ was 1:1, and a film was formed from the resultant mixture by a casting method. The film was held at 100°C, and the conductivity of the film at that temperature was measured, to be 4.3× 10⁻³ S/cm. This is considered to be an indication of proton conduction in which the -OH sites in the PVA, not water, serve as proton ionization hosts and protons move by using the ionization hosts as hopping sites. In addition, the conductivity is very high, for a system not using water. This is considered to arise also from the fact that the content of the PVA in terms of the above-mentioned ratio is as very low as 1:1 and the content of the material as the proton generation source is high. Accordingly, it is considered that the PVA as the second component functions effectively notwithstanding the very low content thereof, leading to a high proton conductivity.

As is clear from the foregoing, according to the present invention, it is possible to provide proton conductors which do not need supply of water, which can be used even in a dry atmosphere and in a high temperature region, and which are excellent in proton conductivity. In addition, according to the present invention, it is possible to provide proton conductors which are dense and are excellent also in gas barrier property. Furthermore, according to the present invention, it is possible to provide electrochemical devices, for example fuel cells, capable of displaying excellent performance without being affected by the atmosphere to which they are exposed.

## Claims

1. A proton conductor comprising carbon clusters having functional groups capable of releasing a proton, and a substance having portions capable of serving as proton-receiving portions.

2. A proton conductor as set forth in claim 1, wherein said carbon cluster is a fullerene.

3. A proton conductor as set forth in claim 1, wherein said functional group capable of releasing a proton has at least one species selected from the group consisting of -SO₃H, -PO(OH)₂, -SO₂NHSO₂-, -SO₂NH₂, and-COOH as a proton-releasing portion.

4. A proton conductor as set forth in claim 3, wherein said functional group capable of releasing a proton is at least one species selected from the group consisting of -A-SO₃H, -A-PO(OH)₂, -A-SO₂NHSO₂-R⁰ (R⁰ is -CF₃ or -CH₃), -A-SO₂NH₂, and -A-COOH [where A is any one of O, R, O-R, R-O, and O-R-O; and R is an alkylene moiety represented by CₓH_{y} (1 ≦ x ≦ 20, 2 ≦ y ≦ 40)].

5. A proton conductor as set forth in claim 3, wherein said functional group capable of releasing a proton is at least one species selected from the group consisting of -A'-SO₃H, -A'-PO(OH)₂, -A' -SO₂NHSO₂-R⁰ (R⁰ is -CF₃ or -CH₃), -A'-SO₂NH₂, and -A'-COOH [where A' is any one of R', O-R', R'-O, R'-O-R", and O-R'-O; and R' and R" are each a fluoroalkylene moiety represented by CₓF_{y}H_{z} (1 ≦ x ≦ 20, 1 ≦ y ≦ 40, 0 ≦ z ≦ 39)].

6. A proton conductor as set forth in claim 1, wherein said portions capable of serving as proton-receiving portions each contain at least one of N, S, O, and P as a constituent element.

7. A proton conductor as set forth in claim 6, wherein said portions capable of serving as proton-receiving portions are each at least one species selected from the group consisting of -O-, R²-CO-R³, R²-CO-O-, -O-CO-O-, -OH, -S-, -NH-, -NR²-, and -Si- (where R² and R³ each represent a hydrocarbon chain).

8. A proton conductor as set forth in claim 1, wherein said substance having said portions capable of serving as proton-receiving portions is water.

9. A proton conductor as set forth in claim 1, wherein said substance having said portions capable of serving as proton-receiving portions is a polyethylene oxide-based polymer.

10. A proton conductor as set forth in claim 1, wherein said substance having said portions capable of serving as proton-receiving portions is a univalent or higher alcohol or a polymer thereof.

11. A proton conductor as set forth in claim 1, wherein said carbon clusters and said substance having said portions capable of serving as proton-receiving portions are mixed with each other in such proportions that the ratio N₂/N₁ of the number N₂ of said portions capable of serving as proton-receiving portions to the number N₁ of said functional groups capable of releasing a proton is in the range of from 0.5 to 3.

12. A proton conductor comprising a substance having functional groups capable of releasing a proton, and carbon clusters having portions capable of serving as proton-receiving portions.

13. A proton conductor as set forth in claim 12, wherein said carbon cluster is a fullerene.

14. A proton conductor as set forth in claim 12, wherein said functional group capable of releasing a proton has at least one species selected from the group consisting of -SO₃H, -PO(OH)₂, -SO₂NHSO₂-, -SO₂NH₂, and -COOH as a proton-releasing portion.

15. A proton conductor as set forth in claim 14, wherein said functional group capable of releasing a proton is at least one species selected from the group consisting of -A-SO₃H, -A-PO(OH)₂, -A-SO₂NHSO₂-R⁰ (R⁰ is - CF₃ or -CH₃), -A-SO₂NH₂, and -A-COOH [ where A is any one of O, R, O-R, R-O, and O-R-O; and R is an alkylene moiety represented by CₓH_{y} (1 ≦ x ≦ 20, 2 ≦ y ≦ 40)].

16. A proton conductor as set forth in claim 14, wherein said functional group capable of releasing a proton is at least one species selected from the group consisting of -A' -SO₃H, -A'-PO(OH)₂, -A'-SO₂NHSO₂-R⁰ (R⁰ is - CF₃ or -CH₃), -A'-SO₂NH₂, and -A'-COOH [ where A' is any one of R', O-R', R' -O, R' -O-R", and O-R' -O; and R' and R" are each a fluoroalkylene moiety represented by CₓF_{y}H_{z} (1 ≦ x ≦ 20, 1 ≦ y ≦ 40, 0 ≦ z ≦ 39)].

17. A proton conductor as set forth in claim 12, wherein said portions capable of serving as proton-receiving portions each contain at least one of N, S, O, and P as a constituent element.

18. A proton conductor as set forth in claim 17, wherein said portions capable of serving as proton-receiving portions are each at least one species selected from the group consisting of -O-, R²-CO-R³, R²-CO-O-, -O-CO-O-, -OH, -S-, -NH-, -NR²-, and -Si- (where R² and R³ each represent a hydrocarbon chain).

19. A proton conductor as set forth in claim 12, wherein said substance having said functional groups capable of releasing a proton and said carbon clusters are mixed with each other in such proportions that the ratio N₂/N₁ of the number N₂ of said portions capable of serving as proton-receiving portions to the number N₁ of said functional groups capable of releasing a proton is in the range of from 0.5 to 3.

20. A proton conductor as set forth in claim 12, wherein said substance having said functional groups capable of releasing a proton is constituted of carbon clusters having functional groups capable of releasing a proton.

21. An electrochemical device comprising a first electrode and a second electrode, and a proton conductor clamped between said electrodes, wherein
said proton conductor comprises carbon clusters having functional groups capable of releasing a proton, and a substance having portions capable of serving as proton-receiving portions.

22. An electrochemical device as set forth in claim 21, which is a fuel cell.

23. An electrochemical device comprising a first electrode and a second electrode, and a proton conductor clamped between said electrodes, wherein
said proton conductor comprises a substance having functional groups capable of releasing a proton, and carbon clusters having portions capable of serving as proton-receiving portions.

24. An electrochemical device as set forth in claim 23, which is a fuel cell.
